# EUROPEAN PATENT APPLICATION

(11) **EP 4 851 891 A1**
(43) Date of publication of application: **09.12.2026**
(21) Application number: 25315197.1
(22) Date of filing: 05.06.2025
(51) Int. Cl.: G06Q 10/087, G06Q 30/06, G06F 3/14

(54) **METHOD FOR UPDATING DISPLAY INFORMATION OF AN ELECTRONIC DISPLAY DEVICE**

(71) Applicant: VusionGroup SA, 92024 Nanterre (FR)
(72) Inventor: Filali Ansary, Tarik, 92024 Nanterre (FR)
(74) Representative: Hoffmann, Alexandre

(57) **Abstract**

The present invention pertains to a method for updating display information of an electronic display device (1), the electronic display device (1) having a first operating mode (OS1) for receiving first information (22) from a first information device (2) via at least a first communication path (20) and a second operating mode (OS2) for receiving second information (32) from a second information device (3) via a second communication path (30), the method comprising: Switching (S1), by the electronic display device (1), from the first operating mode (OS1) to the second operating mode (OS2) based on a first predefined condition, Receiving (R1), at the electronic display device (1) operating in the second operating mode (OS2), second information (32) from the second information device (3) via the second communication path (30), and displaying (D1), at the electronic display device (1) operating in the second operating mode (OS2), display information (320) based on the second information (32).

## Description

### Technical Field

The invention relates to a method for updating display information and to a corresponding electronic display device, server, computer program and system.

### Technological Background

Electronic display devices are digital display devices commonly used in retail environments to provide up-to-date product information, such as prices, discounts, and stock availability. They replace traditional paper price tags with electronic displays, often using e-ink or e-paper technology, which offers excellent readability and low power consumption. Among other advantages, these devices particularly eliminate the need for employees to manually update price tags, saving time and reducing errors. Additionally, electronic display devices can respond instantly to price changes, making them ideal for dynamic pricing strategies.

Electronic display devices are typically connected to a central system, allowing real-time updates of prices and product data without manual intervention. However, while these updates are easily managed through the central system, a short- or long-term connection loss can prevent updating the display information of the electronic display devices. The electronic display devices may thus display outdated or incorrect information.

### Summary of the invention

It is an object of the present invention to provide a method for updating display information of an electronic display device, the electronic display device having a first operating mode for receiving first information from a first information device via at least a first communication path and a second operating mode for receiving second information from a second information device via a second communication path. According to the invention the method comprises the following steps: switching, by the electronic display device, from the first operating mode to the second operating mode based on a first predefined condition; receiving, at the electronic display device operating in the second operating mode, second information from the second information device via the second communication path, and displaying, at the electronic display device operating in the second operating mode, second display information based on the second information.

An electronic display device may refer to a device configured to visually present display information using electronic means, The electronic display device may comprise an electronic display, and may utilize technologies such as LCD, OLED, LED, e-ink, or any other display technology.

Display information may refer to any data, which can be displayed by the electronic display device. This may comprise text, images, graphics, videos, symbols, data-driven representations, or interactive elements.

For example, the electronic display device may be or may comprise an electronic shelf label (ESL) with an e-ink display. For example, the ESL may be placed in a retail store. For example, the ESL may display the display information of a retail item within the retail store. For example, the ESL may display the price and/or the place of origin and/or the shelf life information of the retail item.

Updating the display information may refer to at least one of changing, amending, altering, replacing, adapting, defining or the like of the display information, displayed by the electronic display device. For example, this may comprise replacing the complete current display information with updated display information. For example, this may comprise amending existing display information in the electronic display device. For example, this may comprise adding display information to the existing display information. For example, this may comprise adapting parts of the existing display information. For example, this may comprise defining the display information if none is defined yet. For example, the electronic display device may show the price information of a retail item. For example, the update comprises an update of the price information of the retail item. For example, the display information, shown by the electronic display device, is changed to the new price and therefore updated, while other information relating to the retail item, such as the brand or the name remain unchanged. For example, the electronic display device may show the price information of a first retail item. For example, electronic display device is moved to another place and shall display information relating to a second retail item. For example, the price information of the second retail item is different than the price information of the first retail item. Then, the display information, displayed by the electronic display device, is changed to the second price information and therefore updated.

A first operating mode may refer to a first functionality, and/or a first performance and/or first available features and/or first power consumption characteristics and/or first operational capabilities. A second operating mode may refer to a second functionality, and/or to a second performance and/or second available features and/or second power consumption characteristics and/or second operational capabilities. In particular, the first operating mode and the second operating mode may refer to distinct functionalities, and/or to distinct performances and/or distinct available features and/or distinct power consumption characteristics and/or distinct operational capabilities. For example, the electronic display device may only operate in either the first operating mode or the second operating mode. In one example, while operating in the first operating mode, the electric display device has a first operational capability, and while operating in the second operating mode, the electric display device carries has a second operational capability. For example, the first operating mode is a default mode in which the electronic display device may be intended to operate. For example, the second operating mode is a backup mode in which the electronic display device may alternatively be operating. For example, in the first operating mode, a first communication module may be activated to communicate via the first communication path and in the second operating mode, a second communication module may be activated to communicate via the second communication path. In such case, for example, the second communication module may be deactivated in the first operating mode and/or the first communication module may be deactivated in the second operating mode. The first and second communication module may use the same or a different antenna. The term "activated" in this context means operable to receive and transmit data. For example, a deactivated communication module may not be able to receive data. However, a deactivated communication module may use less energy compared to an activated communication module.

The electronic display device may switch or may be switched from the first operating mode to the second operating mode based on a first predefined condition. The switching being performed based on a first predefined condition may refer to evaluating, by the electronic display device, if a first predefined condition is fulfilled. If the first predefined condition is fulfilled, the electronic display device may switch or may be switched from the first operating mode to the second operating mode.

The first predefined condition may comprise fulfilling a specific criterion and/or threshold and/or state that has been established in advance and serves as a basis for triggering the switching of the operating mode. For example, the electronic display device may operate in the first operating mode. For example, the first predefined condition may comprise a first criterion that must be fulfilled. For example, the electronic display device may determine that the first criterion is fulfilled and switches from the first operating mode to the second operating mode.

First information may refer to any form of digital data, received by the electronic display device for further processing. The first information may comprise text, images, graphics, videos, symbols, data-driven representations, or interactive elements. Second information may refer to any form of digital data, received by the electronic display device for further processing. The second information may comprise text, images, graphics, videos, symbols, data-driven representations, or interactive elements. The display information may be based on the first information and/or the second information. For example, the first information may comprise display information. For example, the first information may comprise information of a retail item in a retail store. For example, second information may be received by the electronic display device. For example, the electronic display device may extract display information from the second information. For example, the second information may comprise a command directed at the electronic display device. For example, the electronic display device may display the display information of a retail item. For example, the second information may include display information comprising the price of a retail item. For example, the second information may comprise the command to increase the price of the retail item by a defined value.

A first information device may be configured to generate and/or receive and/or send and/or forward electronic data. A second information device may be configured to generate and/or receive and/or send and/or forward electronic data. For example, a first information device and/or a second information device may refer to a computer and/or server and/or access point and/or any other system equipped with communication capabilities. The first information device and/or second information device may transmit data via wired or wireless connections, using protocols comprising Wi-Fi, Bluetooth, cellular networks, or any other communication technologies. For example, a first information device may be a central server of a retail store. For example, the central server may communicate with electronic display devices in the retail store via a local network. For example, the central server may communicate via wireless local area network (WLAN). For example, the second information device may be a handheld device used in a retail store. For example, the handheld device may communicate with other retail devices, e.g., electronic display devices, via Bluetooth protocol, in particular using Bluetooth low energy (BLE).

A first communication path may refer to any means to transfer first information between the first information device and the electronic display device. A second communication path may refer to any means to transfer second information between the second information device and the electronic display device. For example, the transfer of first information via the first communication path and/or the transfer of second information via the second communication path may take place via a communicative coupling. The communicative coupling may be wireless and/or wired. For example, the first communication path may use a wireless local area network (WLAN). For example, the first communication path may use Bluetooth. For example, the first communication path and/or the second communication path may be established using an intermediate device. For example, the first information device may be a central sever and the communication between the central server and the electronic display device may be established using an access point and/or a repeater. The first communication path may require a regular exchange of messages. Such regular messages may lead to increased energy consumption. The second communication path may only be established when data is transmitted or ready to be transmitted. There is not exchange of messages when the second communication path is not established and thus no or only very little energy consumption results from the second communication path, when the second communication path is not in use.

In a summarizing example, the electronic display device operates in a first operating mode and is able to receive display information from a first information device, such as a server, via a first communication path such as WLAN. For example, the first predefined condition is an interrupted first communication path. If the first communication path is interrupted, the first predefined condition is met and the electronic display device switches from the first operating mode to a second operating mode. In the second operating mode, the electronic display device may receive second information from a second information device, such as a handheld device, via a second communication path, such as a Bluetooth connection. The electronic display device then may display, while operating in the second operating mode, display information which were comprised in the second information from the handheld device, for example an updated price of a retail item.

This allows despite an interrupted first communication path to update the display information of the electronic display device using a second communication path.

The method may further comprise receiving, at the electronic display device operating in the first operating mode, first information from the first information device via at least the first communication path, and displaying, at the electronic display device operating in the first operating mode, the display information based on the first information.

For example, the first information device may be a central server. For example, the central server may send a first information to the electronic display device, operating in the first operating mode, via the first communication path. For example, the first communication path may be a connection via a local area network (LAN) or wireless local area network (WLAN) or any other wireless technology including proprietary protocols. For example, the electronic display device may receive the sent first information for further processing. For example, the first information may comprise the product information, comprising name and/or price and/or place of origin of the retail item. For example, the electronic display device may extract the first display information from the received first information and illustrates the extracted first display information on the display. In another example, the received first information may comprise a command to be executed by the electronic display device. For example, the first information comprises a command for amending the price of a retail item. For example, the electronic display device may carry out the command in the first operating mode and may display an updated price of the retail item. By sending first information via the first communication path to the electronic display device, a centralized control over the display information is possible. In addition, the first information may be transferred to the electronic display device by another communication path, for example the second communication path or any other communication path, which may use a different communication technology and/or communication route then the first communication path. This may allow for flexibility, e.g., by using intermediate devices, such as handheld devices or smartphones, and redundancy, e.g. by using a LAN and WLAN connection.

The method may further comprise switching, by the electronic display device, from the second operating mode to the first operating mode based on a second predefined condition.

For example, if the second predefined condition is met, the electronic display device may switch from the second operating mode to the first operating mode. The second predefined condition may comprise a specific criterion and/or threshold and/or state that may have been established in advance and serves as a basis for triggering the switching from the second operating mode to the first operating mode. For example, the second predefined condition may comprise a criterion that must be met. For example, the electronic display device determines that the criterion is met and switches from the second to the first operating mode. By switching from the second operating mode to the first operating mode, based on a second predefined condition, a dynamic switching between the second operating mode and the first operating mode is possible.

The first predefined condition may be based on a connection state.

A connection state may describe the state of a connection between two devices. For example, a connection state may refer to a connection quality or a connection quality threshold, or a signal-to-noise-ratio (SNR).

The second predefined condition may be based on a connection state.

For example, the second predefined condition may be based on the same connection state as the first predefined conditions. For example, the first predefined condition and the second predefined condition may be mutually exclusive conditions of the same connection state. For example, the connection state is "off" for the first predefined condition and "on" for the second predefined condition.

For example, the first predefined condition and the second predefined condition may be complementary conditions of the same connection state. For example, the connection state is "better than a first SNR" for the first predefined condition and "even better than a second SNR and better than a first SNR" for the second predefined condition.

The connection state may comprise an active connection state and/or an inactive connection state, wherein the active state may indicate that the electronic display device and the first information device are communicatively connected via at least the first communication path and the inactive connection state may indicate that the electronic display device and the first information device are not communicatively connected. This may provide a clear and unambiguous assignment of operating modes.

The first predefined condition may be fulfilled when the connection state switches from the active state to the inactive state.

For example, the electronic display device may evaluate that the connection state switches from the active state to the inactive state and may evaluate the first predefined condition as fulfilled. In other words, the first predefined condition may be a change of the connection state. Consequently, a change of the connection state may trigger the switching of the operating mode of the electronic display device.

The connection state may switch from the active state to the inactive state when a communication between the electronic display device and the first information device is lost and/or disrupted and/or not possible.

A connection between the electronic display device and the first information device may be lost due to network failures and/or power interruptions and/or hardware malfunctions and/or software errors and/or interferences occurring on the communication path. The connection may be lost if the connections falls short of a predetermined SNR. For example, the first information device may have a hardware malfunction and may not be able to establish a first communication path. For example, the electronic display device may recognize and/or register that the first communication path is lost and the connection state of the first communication path is switched from the active state to the inactive state. In this manner, the communication between the electronic display device and the first information device may be monitored and a lost communication may be automatically detected.

The second predefined condition may be fulfilled when the connection state switches from the inactive state to the active state.

For example, the electronic display device may evaluate that the connection state switches from the inactive state to the active state and may evaluate the second predefined condition as fulfilled.

The connection state may switch from the inactive state to the active state when a communication between the electronic display device and the first information device is established.

An established communication may refer to a reliable exchange of data between the electronic display device and the first information device. Reliable exchange of data may refer to a correct transfer of information without any errors or disturbances or within an acceptable error rate or acceptable disturbances. The acceptable error rate or acceptable disturbances may be predefined thresholds or automatically determined based on statistical data. For example, the connection state between the electronic display device is inactive due to a connection issue. For example, the connection issue is resolved, and the communication between the electronic display device and the first information device is possible but the error rate is above a certain threshold. Then the connection state is still inactive. If, however, the error rate is below the threshold, the connection state switches from inactive to active. By switching from the inactive state to the active state, when a communication between the electronic display device and the first information device is established, an active communication may be detected.

The first predefined condition may be fulfilled when the electronic display device receives a first switching message from the first information device via at least the first communication path and/or from the second information device via the second communication path.

A switching message may comprise data upon which a switching may be inferred and/or an explicit switching command. For example, the switching message may comprise the explicit switching command "switch to second operating mode". A first switching message as first predefined condition may increase flexibility, since the switching of from the first to the second operating mode may be actively triggered and may not be dependent on a connection status. This allows actively putting the electronic display device into the second operating mode by a user. This may be helpful for scheduled maintenance work of the network architecture, comprising the first communication path or the first information device. Using a switching command may also allow for lower energy consumption at the electronic display device. For example, the switching message could put the electronic display device into the second operating for several hours. During this time, the electronic display device does not need to maintain the connection to the first information device and thus reduce energy consumption.

The second predefined condition may be fulfilled when the electronic display device receives a second switching message from the first information device via at least the first communication path and/or from the second information device via the second communication path.

A second switching message may further increase flexibility, since the switching from the first operating mode to the second operating mode may be actively triggered and may not be dependent on a connection status.

For example, the first switching message may comprise the explicit switching command "switch to second operating mode" and the second switching message may comprise the explicit switching command "switch to first operating mode". In this example, the switching commands may be distinguishable by the electronic display device. In another example, both switching message may comprise the same explicit command "switch operating mode". By using one single command for switching both operating modes, the evaluation effort for evaluating switching messages may be reduced.

The method may further comprise receiving, at the electronic display device operating in the first operating mode, periodic messages from the first information device via at least the first communication path and wherein the first predefined condition may be fulfilled when the electronic display device has not received a periodic message for a predefined amount of time.

A periodic message may refer to a message, which is sent at regular time intervals with a certain periodicity. A predefined amount of time may refer to a predefined threshold of time. If the time between two periodic messages exceeds the predefined threshold, the first predefined condition may be fulfilled. The predefined amount of time can be a multiple of the periodicity of the periodic message, for example, 2x, 10x or 100x the periodicity of the periodic messages.

This absence of periodic messages may be deliberate or may be caused by an error and/or interference and/or problem along the communication path. For example, a periodic message may be sent every 10 seconds. If such a periodic message is not received within a predefined amount of time, such as 22 seconds or 50 seconds, the first predefined condition may be fulfilled. This allows for an automatic switching to the second operating mode, based on periodic messages.

The second predefined condition may be fulfilled when the electronic display device again receives the periodic messages.

For example, the electronic display device may not have received a periodic message for a predefined amount of time. This may have caused the electronic display device to switch to the second operating mode, as explained above. The electronic display device may then receive a periodic message again after the time interval, which may cause the second predefined condition to be fulfilled. This allows for an automatic switching to the first operating mode, based on periodic messages.

The first and/or second predefined condition may be fulfilled at a certain time of day.

A certain time of day may refer to a specific moment or period during the day. In particular, it may denote a time range, such as morning, afternoon, or evening, or a more precise moment, like 9:00 AM or sunset. The certain time of the day may also refer to a time stamp or a time stamp format. For example, the electronic display device may evaluate the first predefined condition as fulfilled every day at 5 pm and/or the second predefined condition to be fulfilled at 7 am. Choosing the first and/or predefined condition to be fulfilled at a certain time of day enables automated updating of the electronic display device at a certain time of the day via the first communication path. In addition, it may allow reducing energy consumption by automatically putting the electronic device in the second operating mode.

The first and/or second predefined condition may be fulfilled when a user input is received at the electronic display device.

A user input may refer to any command and/or signal and/or interaction provided by a user via one or more input mechanisms. An input mechanism may comprise flipping a switch and/or pressing a button and/or giving a touch input. For example, the electronic display device may comprise a button and a user may press the button. For example, the electronic display device may evaluate the first predefined condition as fulfilled and may switch to the second operating mode. For example, the electronic display device may evaluate the second predefined condition as fulfilled and may switch to the first mode. For example, the electronic display device may be updated via the second communication path. Requiring an active user input for the first predefined condition to be fulfilled may reduce the overall complexity of the method, since no communication or connection between the electronic display device and the first display device may be needed. In addition, such manual user input may be used for maintenance purposes and/or to deactivate the connection of the electronic display device to the first information device for removing, and/or replacing, and/or disabling the electronic display device.

For example, the first predefined condition may be fulfilled when a user input is received at the electronic display device at a certain time of the day. For example, the predefined time of the day is 9 am. For example, an additional user input may be additionally required at the electronic display device to fulfil the first predefined condition. By requiring an additional user input at a certain time of the day, an automated update of the electronic display device may be carried out in a controllable manner.

The method may further comprise receiving, at the electronic display device, the first predefined condition from the first information device via at least the first communication path and/or from the second information device via at second communication path.

For example, the electronic display device may receive a first information via the first communication path and/or second information via the second communication path comprising the first predefined condition, which may be a connection state. For example, the electronic display device may receive that the first predefined condition is based on a switching message. By receiving the first predefined condition via the first communication path and/or via the second communication path, the first predefined condition may be defined in a flexible and fast way. In this manner, the electronic display device may be able to change the underlying first predefined condition.

The method may further comprise receiving, at the electronic display device, the second predefined condition from the first information device via at least the first communication path and/or from the second information device via at second communication path.

In this way, the second predefined condition may be defined in a flexible and fast way.

The method may further comprise selecting and/or configuring the first predefined condition by a user input at the electronic display device.

Selecting may refer to the choosing a certain predefined condition out of one or more possible conditions at the electronic display device. Configuring may refer to the option of altering and/or selecting certain parameters of a first predefined condition.

For example, the electronic display device may offer several options as first predefined condition. For example, a user may select the first predefined condition to be based on periodic messages. For example, the user may configure the time interval in between periodic messages by a user input. This may enable a comfortable selection and/or configuration of the first predefined condition.

Analogously, the method may further comprise selecting and/or configuring the second predefined condition by a user input at the electronic display device.

The method may further comprise receiving, at the electronic display device operating in the second operating mode, third information via at least the first communication path.

Third information may refer to any form of digital data, received by the electronic display device for further processing. The third information may comprise text, images, graphics, videos, symbols, data-driven representations, or interactive elements. The third information may or may not be equal to the first information. For example, the electronic display device may operate in the second operating mode despite an active connection via the first communication path. For example, the first information device sends a third information via the first communication path to the electronic display device. For example, the third information may comprise a third display information. For example, the third display information may comprise the price of a retail item within a retail store and the price of the retail item. By receiving third information by the electronic display device operating in the second operating mode, via the at least first communication path, sending information to the electronic display device may be possible via two separate communication paths.

The method may further comprise displaying, at the electronic display device operating in the second operating mode, the display information based on the third information.

For example, the electronic display device may receive third information, comprising third display information with an updated price of a retail item. For example, the electronic display device may extract the third display information and display the updated price. As a result, the electronic display device may be updated via the first communication path, despite operating in the second operating mode. This may allow updating the electronic display device even though it has not switched to the first operating mode yet. Said updating may help in preserving data consistency, for example in case the first information device comprises or is connected to a central database. The central database may be a database that stores and manages information and contains the "official" version of information. In addition, said updating may allow for fast updating of display information on the electronic display device in case recovery from the second operating mode takes longer, for example in case the second operating mode is a backup or offline mode and manual input is required for switching to the first operating mode.

The method may further comprise discarding, by the electronic display device operating in the second operating mode, the received third information.

For example, the electronic display device may receive a third information, comprising third display information with an updated price of a retail item. For example, the electronic display device may not extract the third display information. For example, the electronic display device may not update the displayed display information. As a result, the electronic display device may only be updated via the second communication path, while operating in the second operating mode, which enhances the control over the updating process.

The method may further comprise receiving, at the electronic display device operating in the first operating mode, fourth information via the second communication path.

Fourth information may refer to any form of digital data, received by the electronic display device for further processing. The fourth information may comprise text, images, graphics, videos, symbols, data-driven representations, or interactive elements. The fourth information may or may not be equal to the second information. For example, the electronic display device may operate in the first operating mode. For example, the second information device may send a fourth information via the second communication path to the electronic display device. For example, the fourth information may comprise a fourth display information. For example, the fourth display information may comprise price information of a retail item within a retail store. By receiving fourth information by the electronic display device operating in the first operating mode, via the second communication path, sending information to the electronic display device may be possible via two separate communication paths.

The method my further comprise displaying, at the electronic display device operating in the first operating mode, the display information based on the fourth information.

For example, the electronic display device may receive a fourth information, comprising fourth display information with updated price information of a retail item. For example, the electronic display device may extract the fourth display information and update the price information. As a result, the electronic display device may be updated via the second communication path, despite operating in the first operating mode. For example, a store clerk may update a retail price of an item by using a smartphone.

The method may comprise discarding, by the electronic display device operating in the first operating mode, the received fourth information. For example, the electronic display device may receive a fourth information, comprising fourth display information with updated price information of a retail item. For example, the electronic display device may not extract the fourth display information. For example, the electronic display device may not update the shown display information. As a result, the electronic display device may only be updated via the first communication path, while operating in the first operating mode, which enhances the control over the updating process. This may further increase security and data consistency. For example, in the first operating mode, the electronic display device may only accept display information from the first information device, e.g. a server connected to a central database, and not a second information device, e.g., a smartphone.

The first information may have been configured by the first information device and/or the second information may have been configured by the second information device.

Information configured by an information device may refer to defining and/or acquiring information by the information device. For example, the first information device may be any computer and configuring the first information by the first information device comprises using a user interface to enter and/or edit first information on the first information device. The user interface may refer to another device with user input capabilities communicatively connected to the first information device. For example, such other device may comprise any other computing device having a connection, e.g. via LAN or internet, to the first information device. For example, a user may use an internet browser on a computer to enter or edit price information on the first information device. In addition or alternatively, the user interface may be realized by user input devices, as for example a keyboard or any other device connected to the first information device. The second information device may be a smartphone or mobile phone. The terms smartphone and mobile phone are used interchangeably in this description. For example, the first information and/or second information is defined via a user input at the first information device and/or second information device. For example, a user determines price information of a retail item. For example, the user may input price information into the mobile phone. For example, the first information and/or second information is acquired from a database and/or server and/or mobile application. By having configured the first information by the first information device and the second information by the second information device, the flexibility for defining information to be sent to the electronic display device via a communication path may be increased.

The method may further comprise receiving, at the electronic display device operating in the second operating mode, fifth information from the second information device via the second communication path, wherein the fifth information originated from the first information device and may have been forwarded by the second information device.

Fifth information may refer to any form of digital data, received by the electronic display device for further processing. The fifth information may comprise text, images, graphics, videos, symbols, data-driven representations, or interactive elements. The fifth information may or may not be equal to the first information.

Originated from the first information device may refer to a transmission of the fifth information from the first information device to the second information device. For example, the electronic display device may have switched to the second operating mode due to the fulfilment of the first condition. For example, the first condition may have been an inactive connection state between the first information device and the electronic display device. For example, the first information device may transmit the fifth information to the second information device and the second information device may forward the fifth information to the electronic display device via the second communication path. By this, the first information device may transmit the fifth information to the electronic display device via the second information device, as no communication between the two devices is possible via the first communication path.

For example, the first information device is a server which communicates and updates the electronic display device via a Wi-Fi connection. If the Wi-Fi connection is interrupted, the server may establish another connection to a handheld device, for example using cellular technologies. The handheld then can establish a Bluetooth communication with the electronic display device and transmit the fifth information to the electronic display device. In other words, the updating of the electronic display device and the communication between the first information device and the display device is mediated using the second information device.

The second information may be transmitted by the second information device to the first information device.

For example, the second information device may send the second information via the second communication path to the electronic display device. For example, the second information device additionally sends the second information to the first information device. This may enable the first information device to record the second information sent by the second information device. In particular, the first information device may be updated by the second information device. This may also allow the first information device to gather all updated information and may further allow to update a central database of display information connected or in the first information device, even if there is no direct connection between the electronic display device and the first information device.

The method may further comprise in response to switching, by the electronic display device, from the second operating mode to the first operating mode based on the second predefined condition, sending to the first information device the second information via at least the first communication path.

For example, when the electronic display device switches from the second operating mode to the first operating mode, it may send the received second information to the first information device. By receiving the second information, the first information device may store the second information received by the electronic display device. In particular, this may allow updating a central database of display information connected to or in the first information device.

The method may further comprise receiving, at the first information device, the second information from the second information device.

For example, the first information device receives updated price information from the second information device.

The method may further comprise evaluating, by the first information device, the second information based on a predefined evaluation criterion.

For example, the first information device evaluates, if the updated price information is the most recent price information available, for example by comparing the price information with information stored in a central database. The first information may have been configured by the first information device.

The method may further comprise, if the predefined evaluation criterion is fulfilled, storing the second information by the first information device and/or if the predefined evaluation criterion is not fulfilled, sending, by the first information device, sixth information, different from the second information to the second information device, to be forwarded to the electronic display device.

This may enable to control the second display information and further enable consistent information between the first and the second information device.

The method may further comprise, that the evaluation criterion is fulfilled when the received second information corresponds to predefined data.

Predefined data for example may refer to a certain range of values and/or threshold value and/or the most recent information, received by the electronic display device. For example, the second information may comprise a price limit of a retail item. For example, the evaluation criterion may be fulfilled when the updated price is below the predefined price limit.

For example, the second information may comprise a price which is below the price limit. In this case, the first information device may store the second information, and may keep a database up to date. For example, the second information may comprise a price which is above the price limit. In this case, the first information device may send sixth information, comprising corrected price information, to the second information device, which forwards the sixth information to the electronic display device. In this way, the displayed display information may be controlled and corrected if necessary.

The method may further comprise that the evaluation criterion is fulfilled when the received second information is more recent than the corresponding data stored on the first information device.

For example, the stored data may indicate that the second information may be from 2 am and the second information may be from 3 am. In that case, the second information may be stored by the first information device. If the second information may be from 1 am, the stored data may be more recent than the second information. In that case, the first information device may send the more recent information to the second information device, which forwards it to the electronic display device. In this manner, the electronic display device may show the most recent display information.

The method may further comprise emitting, by the electronic display device, an electronic and/or optical and/or acoustic signal, during and/or after switching from the first operating mode to the second operating mode and/or from the second operating mode to the first operating mode.

For example, the electronic display device, after switching from the first operating mode to the second operating mode, may indicate the switching by emitting one or more acoustic signals. For example, the electronic display device may signal the switching by emitting light from an LED. Alternatively or in addition, the electronic display device may emit an acoustic signal, for example an alarm sound. Alternatively or in addition, the electronic display device may send an electronic signal to the first information device and/or second information device via the at least first communication path and/or second communication path.

The method may further comprise receiving, at the electronic display device, a command from the second information device via the second communication path, and in response to receiving the command, emitting, by the electronic display device, an electronic and/or optical and/or acoustic signal.

This may allow a user to quickly identify a specific electronic display device. For example, if an employee stands before a shelf comprising multiple electronic display devices, triggering an acoustic or visual signal may help to identify the electronic display device with which the user intends to interact.

For example, the command may also be embedded in a switching message and the electronic display device may emit an electronic and/or optical and/or acoustic signal when receiving the switching message. This may increase security by signalling the switching of the operating modes of the electronic display device.

The method may further comprise verifying, by the electronic display device, integrity of the received second information, in particular by calculating and comparing hash values.

Verifying the integrity may refer to checking whether the received signals are not of fraudulent nature. For example, the electronic display may operate in the second operating mode and may receive information comprising a command from a handheld. For example, the command may include the reduction of the price information of a retail item. For example, the electronic display device may calculate and compare hash values in order to check, whether the command of handheld may be valid or not. This may improve the security and integrity of the method by preventing fraudulent activity.

The second information received from the second information device may be encrypted, therefore, the method may further comprise decrypting, at the electronic display device, the second information.

For example, the encryption may be symmetric and/or asymmetric and/or involve hashing. By using encrypted data and by decrypting it at the electronic display device, the overall security of the method may be significantly improved.

The method may further comprise, after receiving, at the electronic display device, the second information from a second information device via a second communication path, and before displaying, at the electronic display device, the received second information, requesting a user input at the electronic display device.

For example, the user input may comprise the entering of a code or pushing a button at the electronic display device. For example, the electronic display device received the second information comprising a price of a retail item. For example, before updating the shown display information, a four-digit code may be entered at the electronic display device. For example, before updating the shown display information, a user may need to press a button on the electronic display device to confirm the update. In this manner, security may be improved.

The method may further comprise, receiving, at the electronic display device operating in the second operating mode, the second information from a third information device via the second communication path.

For example, the second information device and the third information device may be mobile phones of two employees in a retail store. For example, both employees may update the electronic shelf label via their respective mobile phones. By allowing receiving the second information from a third device via the second communication path, updating the electronic display device via the second communication path may not be restricted to a single information device. This may allow to update all electronic display devices in a shop quicker compared to only using one information device that uses the second communication path.

The method may further comprise sending, by the electronic display device operating in the second operating mode, a message to the second information device enabling the second information device to identify and/or display the electronic display device as operating in the second operating mode.

A message may refer to an electrical signal sent from the electronic display device. The electrical signal may comprise information about the electronic display device. The information may comprise text and/or a number and/or any possible means of labelling. Identifying may refer to evaluating, by the second information device, the sent message. For example, the electronic display device operates in the second operating mode. For example, the electronic display device may send a message comprising "2" and/or "mode 2" or any other indication for signalling that the electronic display device may operate in the second operating mode. For example, the second information device may receive the message and extract the information. For example, the second information device is a mobile phone. For example, the mobile phone may show the extracted information on the display. For example, the display may indicate the mode of the electronic information label by showing "2" and/or "mode 2". By sending the message to the second information device, tracking changes of the operating mode may be improved. Also, it may allow to list all electronic display devices operating in the second operating mode. This may help identifying electronic display devices being ready for and/or requiring updates via the second communication path.

The first information device may be or may comprise one or more servers, and/or is connected to a cloud service.

The second information device may be a handheld and/or portable device, preferably a smartphone or remote control, and/or a computer. A portable device allows to update the display information locally at the site of the electronic display device. This allows for a user to directly see the feedback on the electronic display device. Furthermore, using a direct connection between the second communication device and the electronic display device, allows communicating with the electronic display device without using additional network architecture.

The electronic display device may be or may comprise an electronic shelf label or digital shelf label or a rail with electronic shelf labels. A rail with electronic shelf labels may refer to a fixation of electronic shelf labels at one or more shelf floors of a shelf.

The first display information and/or second display information may comprise product information, in particular, price information. For example, the first and/or second display information may comprise the name of a retail item or a price information of the retail item. The electronic shelf label may be associated with a product, and the first information and second information may relate to information of the associated product.

"Being associated with" may refer to a correspondence of an electronic shelf label and a product. For example, the electronic shelf label is placed at a shelf of a retail store with specific retail items. For example, the electronic display device displays information related to the specific retail item. Then, the electronic shelf label is associated with the retail item.

Receiving, at the electronic display device, the first information from the first information device via at least the first communication path may comprise receiving the first information via one or more access points. For example, the first information device is a server of a retail store. For example, the retail store comprises several access points to the network for enhancing the connectivity within the retail store.

The method may comprise receiving, at the electronic display device operating in the first operating mode, the first information from the first information device via a third communication path. The third communication path may refer to a different path than the first communication path. For example, the first communication path may comprise a first access point and the third communication path may comprise a second access point. By enabling the communication between the electronic display device and the first information device, the method enables reliable communication by redundant communication paths.

The first communication path and the third communication path may use a different communication technology. For example, the first communication path may use a wireless technology, whereas the third communication path may use a wired connection.

The first communication path and the second communication path use a different or the same communication technology. For example, the first communication path and the second communication may use WiFi. Alternatively, the first communication path may use WiFi and the second communication path may use Bluetooth Low Energy (BLE).

The communication technology may comprise wireless communication technologies, in particular Bluetooth Low Energy, WiFi, or RFID. Communication technology may refer to the technology relating to the first communication path, second communication path and third communication path.

It is further object of the present invention to provide an electronic display device comprising at least one processor and at least one memory further storing instructions that, when executed by the at least one processor, cause the electronic display device to execute the method according to the invention, in particular the method steps mentioned above. The electronic display device may further comprise or be connected to at least one communication module including an antenna for communicating with the first and second information device. The communication module may support different communication technologies, including wireless and wired communication protocols, as for example, WiFi, BLE, RFID, etc.

It is further object of the present invention to provide an electronic display device configured to execute the method according to the invention, in particular the method steps mentioned above.

It is further object of the present invention to provide a first information device, e.g. a server, configured to execute the method steps of the first information device according to the invention. It is further object of the present invention to provide a second information device, e.g. a portable device, configured to execute the method steps of the second information device according to the invention. The first information device comprising at least one processor and at least one memory further storing instructions that, when executed by the at least one processor, cause the first information device to execute the method steps of the first information device according to the invention, in particular the method steps of the first information device as mentioned above. The second information device comprising at least one processor and at least one memory further storing instructions that, when executed by the at least one processor, cause the second information device to execute the method steps of the second information device according to the invention, in particular the method steps of the second information device as mentioned above. The first and second information device may further comprise or be connected to a communication module including an antenna for communicating with the electronic display device. The communication module may support different communication technologies, including wireless and wired communication protocols, as for example, WiFi, BLE, RFID, etc.

It is further object of the present invention to provide a computer program comprising instructions which, when the program is executed by a computer, cause the computer to carry out the method according to the invention, in particular the method steps or the electronic display device, or the first information device, or the second display device, or the third display device, as mentioned above.

It is further object of the present invention to provide a system comprising at least one electronic display device, at least one first information device, and at least one second information device, wherein the at least one electronic display device is configured to execute the method according to the invention. For example, the system may comprise a plurality of electronic display devices.

It is further object of the present invention to provide an electronic display device configured to operate in a first operating mode and a second operating mode, receive a first information from a first information device via at least a first communication path, while operating in the first operating mode, and receive a second information from a second information device via a second communication path, while operating in the second operating mode, display display information based on the first information and the second information, switch from the first operating mode to the second operating mode based on a first predefined condition.

The electronic display device may further be configured to switch from the second operating mode to the first operating mode based on a second predefined condition.

### Brief description of the drawings

The present disclosure will be more readily appreciated by reference to the following detailed description when being considered in connection with the accompanying drawings in which:
- Figure 1: schematically shows a system according to the invention,
- Figure 2: schematically shows a method according to the invention,
- Figure 3: schematically shows another method according to the invention,
- Figure 4: schematically shows another method according to the invention,
- Figure 5: schematically shows another method according to the invention,
- Figure 6: schematically shows another method according to the invention,
- Figure 7: schematically shows another method according to the invention,
- Figures 8a, b: schematically show another method according to the invention,
- Figures 9a, b: schematically show another method according to the invention,
- Figure 10: schematically shows another method according to the invention,
- Figure 11: schematically shows another method according to the invention; and
- Figure 12: schematically shows another method according to the invention.

### Detailed description of preferred embodiments

In the following, the invention will be explained in more detail with reference to the accompanying figures. In the figures, like elements are denoted by identical reference numerals and repeated description thereof may be omitted in order to avoid redundancies.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

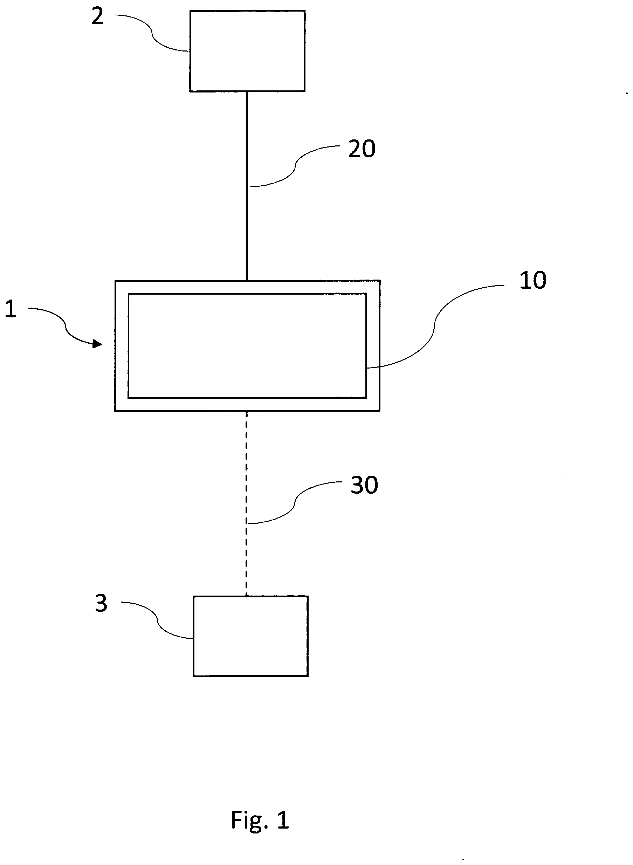

Figure 1 shows a system according to the invention. The system comprises an electronic display device 1, a first information device 2 and a second information device 3. The electronic display device 1, comprises a display 10, and may be communicatively coupled with the first information device 2 via a first communication path 20. This coupling with the first information device 2 via a first communication path 20 may be an established wireless connection. Further, the electronic display device 1 is configured to be communicatively coupled with the second information device 3 via a second communication path 30. The electronic display device 1 can thus be coupled with the second information device 3, e.g. a smartphone. For example, the connection may only be established when data is to be transmitted. The electronic display device 1 has a first operating mode for receiving first information from the first information device 2 via at least a first communication path 20 and a second operating mode for receiving second information from a second information device 3 via a second communication path 30.

The electronic display 1 may receive first information from the first information device 2, which comprises first display information. The electronic display device 1 may extract the first display information, based on the received first information and display the first display information in the display 10.

For example, the first information device 2 may be or may comprise one or more servers, and/or is connected to a cloud service, hereinafter simply referred to as server. In this manner, the electronic display device 1 may receive information from the server via the first communication path 20. The server may store first information, including information related to the display information. Display information may refer to information that may be displayed by the electronic display device 1 or which may influence the displaying properties of the electronic display device 1.

For example, the electronic display device 1 is located in a retail store and the server 2 is used to send price tag information to be displayed the electronic display device 1. The server 2 may send this display information to the electronic display device 1 several times a day to keep the price on the electronic display devices up to date and to comply with external factors such as prices at a food stock or the like.

However, if the first communication path 20 between the first information device 2 and the electronic display device 1 is interrupted or erroneous, the display information cannot be updated, and the electronic display device 1 would display the expired display information.

For this reason, the electronic display device 1 may then be communicatively coupled to a second information device 3 via a second communication path 30. Over the second communication path 30 the electronic display device 1 may receive second information 32 which comprise display information 320.

For example, the second information device 3 may be a handheld and/or portable device, preferably a smartphone or remote control, and/or a computer. In the example of the retail store, an employee would be able to use the handheld 3 device to establish a connection to the electronic display device 1 to update the price tag information manually.

However, the electronic display device 1 may normally be operated in a first operating mode in which the electronic display device 1 receives information from the first information device, e.g. the server. In other words, under normal circumstances the electronic display device 1 would rely on the first communication path 20. To be able to receive second information from a second communication path 30, the electronic display device 1 may switch to a second operating mode in which a second communication path 30 to the second information device 3 can be established. Such a switching of the first operating mode to the second operating mode can be realized by the electronic display device 1 automatically, if a certain predefined condition is fulfilled.

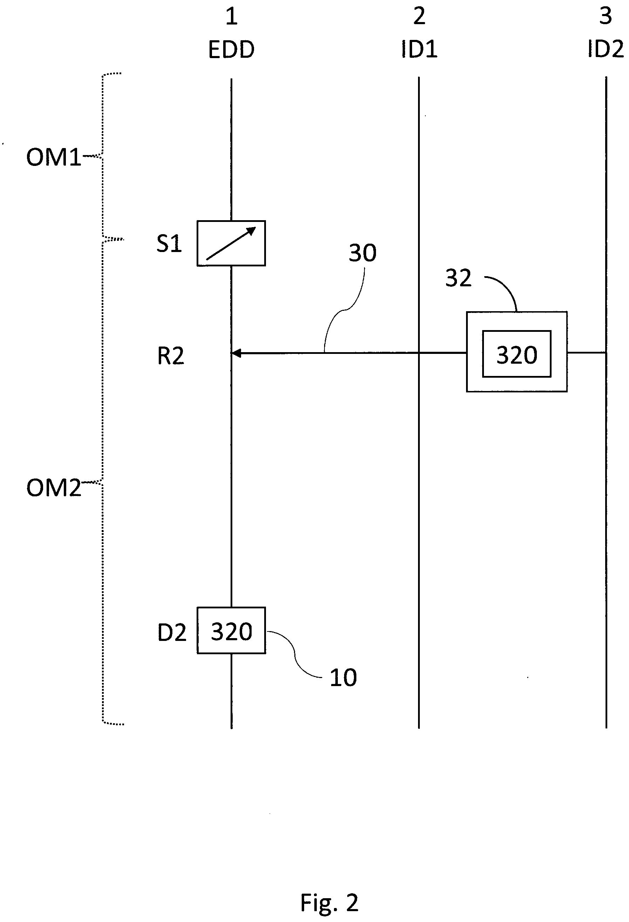

Figure 2 shows a method according to the invention. The electronic display device, EDD, 1 operates in the first operating mode OM1. If a first predefined condition is fulfilled, the electronic display device 1 switches S1 to a second operating mode OM2. In the second operating mode OM2, the electronic display device 1 may receive R2 second information 32 from the second information device, ID2, 3 via the second communication path 30. The second information 32 may comprise second display information 320, which may be extracted by the electronic display device 1 and displayed D2 on the display 10 afterwards.

For example, the first predefined condition is based on a connection state. In particular, the electronic display device 1 may check whether there is an active communication state, that indicates that the electronic display device 1 is connected for example via a first communication path 20 to a first information device, ID1, 2. If the electronic display device 1 is not communicatively connected to the first information device 2 via the first communication path 20, the connection state is inactive. If the connection state inactive, the first predefined condition may be fulfilled and the electronic display device 1 switches from the first operating mode OM1 to the second operating mode OM2. In particular, the switching S1 of the operating modes can be triggered by a switching from an active connection state to an inactive connection state.

Such a switching of the connection state can for example be caused if a communication between the electronic display device 1 and the first information device 2 is lost and/or interrupted and/or not possible. However, the electronic display device 1 may try to reconnect to the first information device 2 before the electronic display device 1 acknowledges a change of the connection state. As the monitoring of the connection state can be performed automatically, the switching of the first operating mode OM1 to the second operating mode OM2 may be performed automatically as well. In this case, employees of the retail store may be able to connect to the electronic display device 1 without a further reconfiguration of the electronic display device 1.

However, the first predefined condition may also depend on a certain time of a day. For example, the electronic display device 1 may be configured to switch from the first operating mode OM1 to the second operating mode OM2 every afternoon. For example, such an automatically switching can be used for the local maintenance of various electronic display devices 1, where employees of the retail store may alter or change or rearrange electronic display devices 1. In this way the first operating mode OM1 can be used to generally keep the electronic display device 1 up to date, whereas the second operating modes OM3 can be used for local maintenance at the site of the electronic display device.

In another example, the first predefined condition may also be fulfilled if a user input is received at the electronic display device 1, for example, if a user changes the operating mode manually via a direct input at the display device 1.

The predefined condition may be configured by the first information device 2. For example, the first information 22 sent by the first information device 2 may comprise configuration information for the electronic display device 1. The configuration may define a signal quality of the first communication path 20 or a signal-to-noise-ratio of the first communication path or the like. It is also possible to select such configuration information via a user input directly at the electronic display device 1.

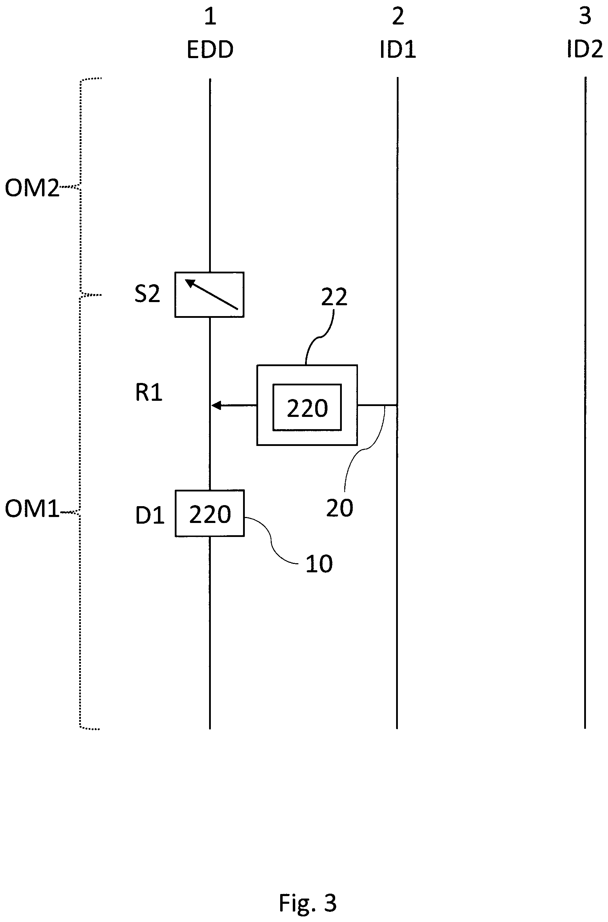

Figure 3 schematically shows that the electronic display device may switch from the second operating mode OM2 to the first operating mode OM1. The switching S2 from the second operating mode OM2 to the first operating mode OM1 may be based on a second predefined condition.

For example, the electronic display device 1 my operate in the second operating mode OM2. Based on a second predefined condition, the electronic display device 1 may switch S2 from the second operating mode OM2 to the first operating mode OM1. After switching S2 to the first operating mode OM1, the electronic display device 1 may receive R1 first information 22 via the first communication path 20. The first information 22 may comprise first display information 220, which is extracted by the electronic display device 1 and displayed D1 on the display 11.

Analogous to the first predefined condition, the second predefined condition may be based on similar parameters and configured by similar means. The second predefined condition may be based on a connection state. In particular, the second predefined condition may be based on the connection state of the first communication path or the connection state of the second communication path. For example, if the first communication path was interrupted, and the electronic display device 1 switched to the second operating mode OM2, then a reestablishment of the first connection path 20 may fulfill the second predefined condition. Even though the first communication path may be reestablished, the second predefined condition may only be fulfilled if the first communication path 20 has a certain reliability or quality. However, it is also possible that a failure of the second communication path 30 fulfills the second predefined condition such that the electronic display device 1 tries to reconnect to the first information device 20 if the connection to the second information device 30 fails. It is also possible that a user directly switches the electronic display device 1 from the second operating mode OM2 to the first operating mode OM1. Furthermore, the second predefined condition may be defined by the first information device 20 or the second information device 30 in the above-mentioned manner.

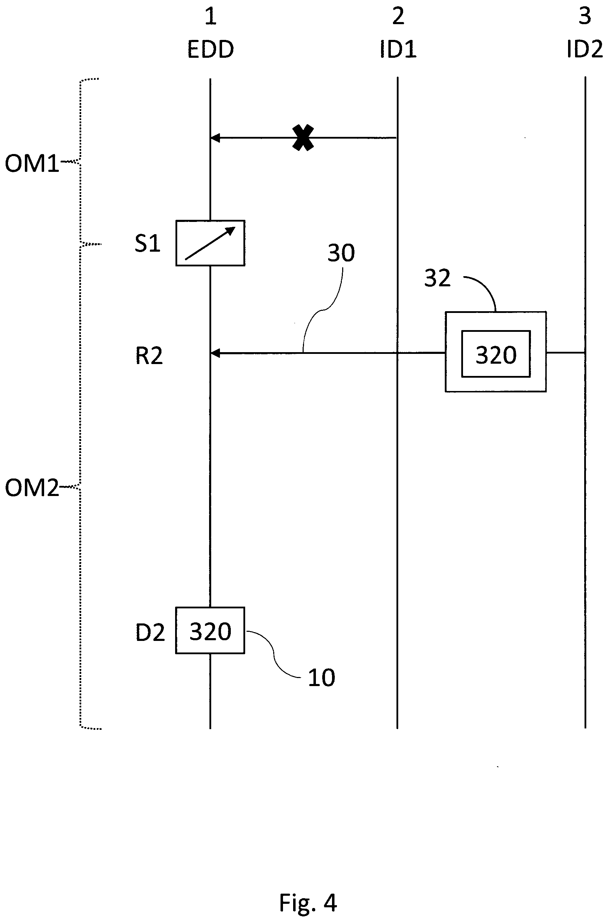

Figure 4 shows an example of the method according to the invention, wherein the first predefined condition may be based on a connection state. The connection state may give information about the communicative coupling between the first information device 2 and the electronic display device 1. For example, the connection state may comprise an active connection state and an inactive connection state, wherein the active state may indicate that the electronic display device 1 and the first information device 2 are communicatively connected via at least the first communication path 20 and the inactive state indicates that the electronic display device 1 and the first information device 2 are not communicatively connected. For example, the electronic display device 1 may be connected via WLAN to a first information device 20 and the communication between the electronic display device 1 and the first information device 2 may be interrupted. This may be caused by local network problems, or any other possible disturbances, which prevent a reliable data exchange between the electronic display device 1 and the first information device 2. Without communicative coupling between the electronic display device 1 and the first information device 2, the communication state is set to inactive and thus the first predefined condition may be fulfilled. Consequently, the electronic display device 1 may switch to the second operating mode OM2. During operating in the second operating mode OM2, the electronic display device 1 may receive R2 second information 32 via the second communication path 30 from the second information device 2. The second information 32 may comprise second display information 320, which may be extracted and displayed D2 by the electronic display device 1.

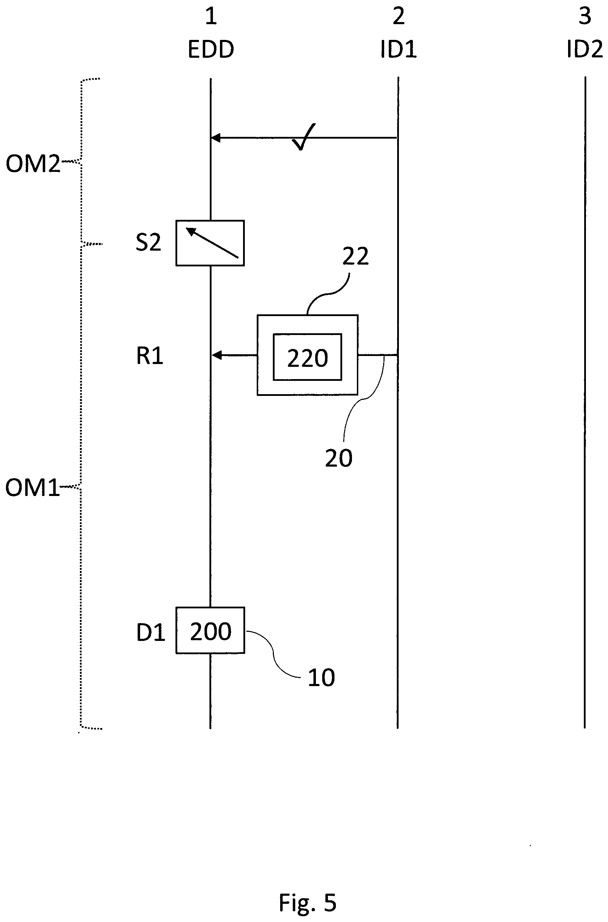

Figure 5 shows an example of the method according to the invention, in particular, the switching of the electronic display device 1 from the second operating mode OM2 to the first operating mode OM1. The second predefined condition may be based on a connection state. In particular, the first predefined condition and the second predefined condition may be mutually exclusively dependent on the same connection state as above. For example, the first predefined condition may be fulfilled when the connection state between the electronic display device 1 and the first information device 2 is active. The second predefined condition may be fulfilled when the same connection state is inactive. If the connection between the electronic display device 1 and the first information device 2 is reestablished, the connection state may switch to the active state and the electronic display device 1 may switch S2 from the second operating mode OM2 to the first operating mode OM1. In the next step, for example, a first information 22 comprising a first display information 220 may be received R1 by the electronic display device 1 operating in the first operating mode OM1 from the first information device 2 via the first communication path 20.

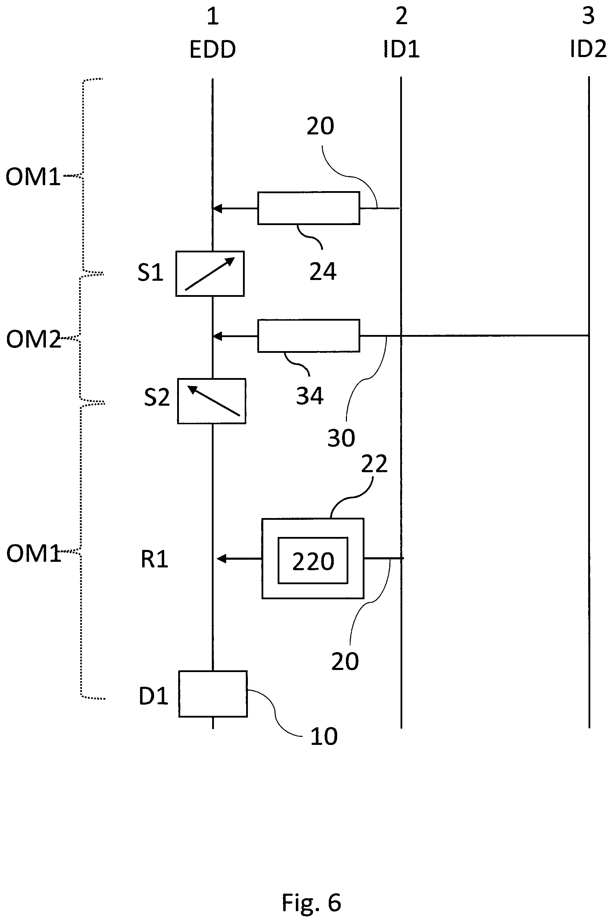

Figure 6 shows an example of the method according to the invention, wherein the operating mode of the electronic display device 1 may be switched based on the reception of a switching message 24 sent from the first information device 2 and/or the second information device 3.

Initially, in this example, the electronic display device 1 is in the first operating mode OM1. The first predefined condition may be fulfilled when the electronic display device 1 receives a first switching message 24 from the first information device 2 via the first communication path 20. As the electronic display device 1 operates in the first operating mode OM1, the electronic display device 1 may receive a first switching message 24 from the first information device and consequently switches S1 from the first operating mode OM1 to the second operating mode OM2.

Analogously, if the electronic display device 1 operates in the second operating mode OM2, the electronic display device 1 may receive R1 a switching message 34 from the second information device 3 via the second communication path 30. The second predefined condition may be fulfilled when the electronic display device 1 receives the second switching message 34 from the second information device 3 via the second communication path 30. Consequently, the electronic display device 1 may switch S2 from the second operating mode OM2 to the first operating mode OM1. In the first operating mode OM1, the electronic display device 1 may again receive a first information 22 via the first communication path 20, comprising a first display information 220. The display information 220 may be extracted by the electronic display device 1 and displayed D1 at the display 10 afterwards.

In Figure 6, both the first switching message 24 and the second switching message 34 may comprise a switching command. The switching command of the first switching message 24 may for example comprise the command "switch to the second operating mode". For example, the second switching message 34 may comprise the command "switch to the first operating mode". In another example, the first switching message 24 and the second switching message 34 may both comprise the same command, such as "switch operating mode". The latter case may simplify the commands by streamlining the command. In this case, the electronic display device 1 may only recognize a single switching command and may not distinguish between different switching commands.

Not shown in Figure 6 is the possibility that the first switching command and the second switching command can be sent via the first communication path 20 from the first information device 2 and/or via the second communication path 30 from the second information device 3. This requires that the electronic display device 1 in a first operating mode OM1 and/or a second operating mode OM2 can establish connections to the first information device 2 and/or the second information device 3.

Also not shown is the possibility, that the first switching message 24 is comprised in first information 22 and the second switching message 34 is comprised in the second information 32.

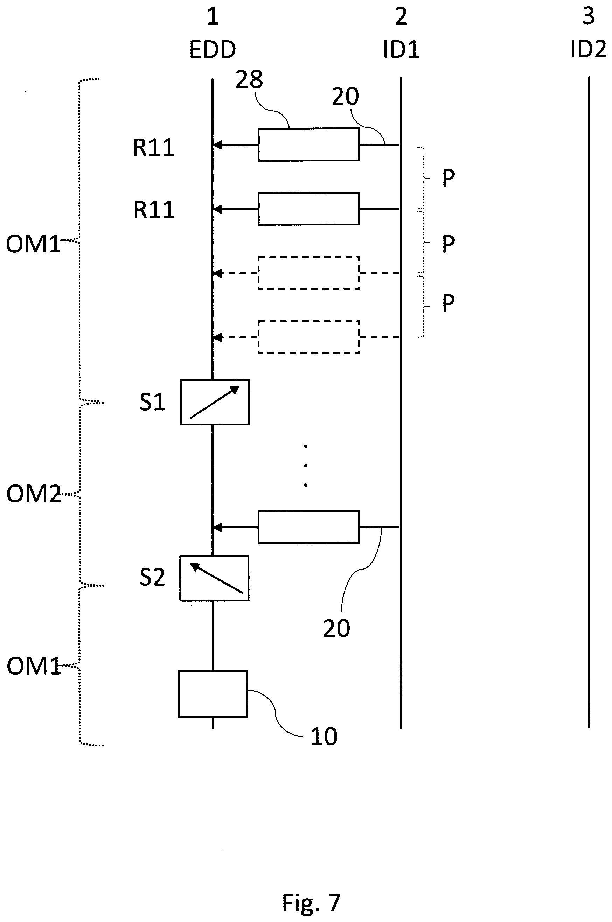

Figure 7 shows a method according to the invention, in which the first predefined condition and/or the second predefined condition are based on the periodic reception of periodically messages 28. The electronic display device 1 may operate in the first operating mode OM1 and receives periodic messages 28 via the first communication path 20. The periodic messages are sent with a periodicity P, which may refer to the time between two subsequent periodic messages 28. If the electronic display device 1 recognizes that it has not received any periodic messages 28 (shown as dashed lines) for a certain amount of time, the first predefined condition is fulfilled. As a result, the electronic display device 1 may switch S1 from the first operating mode OM1 to the second operating mode OM2. For example, the first predefined amount of time may be a multiple of the periodicity.

The second predefined condition may be fulfilled, if the electronic display device 1 receives the periodic messages 28 again via the first communication path 20. As a consequence, the electronic display device may switch S2 from the second operating mode OM2 back to the first operating mode OM1.

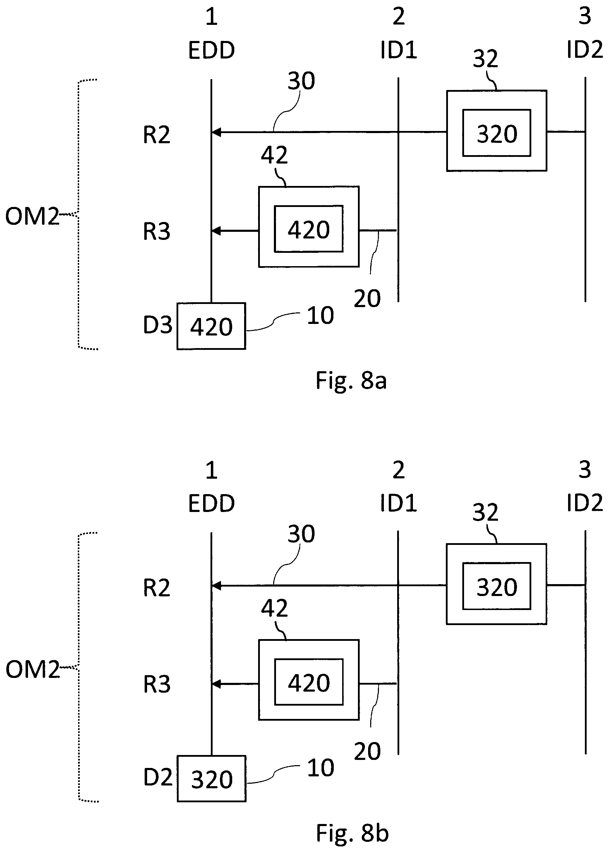

Figure 8a shows an example of the method according to the invention. The electronic display device 1 may at first receive second information 32, comprising second display information 320, via the second communication path 30 while operating in the second operating mode OM2. The electronic display device 1 may further receive R3 third information 42 comprising third display information 420 via the first communication path 20. The electronic display device 1 may extract the third display information 420 from the third information 42 and may display D3 the third display information 420 on the display 10 of the electronic display device 1. The electronic display device 1 may thus disregard and/or update the second display information 320. In other words, the third display information has a higher priority than the second display information 320. The electronic display device 1 may also disregard the second information 32 completely and instead wait for third information 42 if a first communication path 20 is available to the electronic display device 1.

Figure 8b shows an example of the method according to the invention, wherein the electronic display device 1 may discard the received third information 42. In this case, the electronic display device 1 may not extract the third display information 420 and the display 10 may show the earlier received second display information 320. In this case, the reception of information via the first communication path 20 may be prohibited in the second operating mode OM2 and thus no undesired display information may be displayed on the display 10.

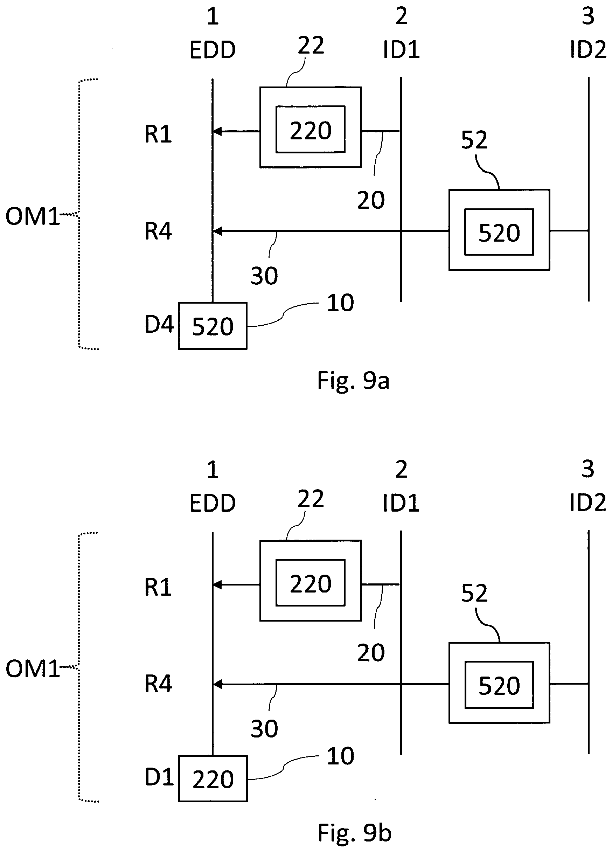

Figure 9a shows an example of the method according to the invention. The electronic display device 1 operates in the first operating mode OM1 and receives first information 22 via the first communication path 20. Subsequently, the electronic display device 1 may receive R4 fourth information 52 comprising fourth display information 520 via the second communication path 30. The electronic display device 1 may display D4 the fourth display information 520.

Figure 9b shows an example of the method according to the invention. The electronic display device 1 may first receive first information 22 via the first communication path 20. Subsequently, the electronic display device 1 may receive R4 fourth information 52 comprising fourth display information 520 via the second communication path 30. However, the electronic display device 1 may disregard the fourth display information 520 and display the previously received first display information 220. In other words, the displaying of information via the second communication path 30 may be prohibited, while the electronic display device operates in the first operating mode OM1.

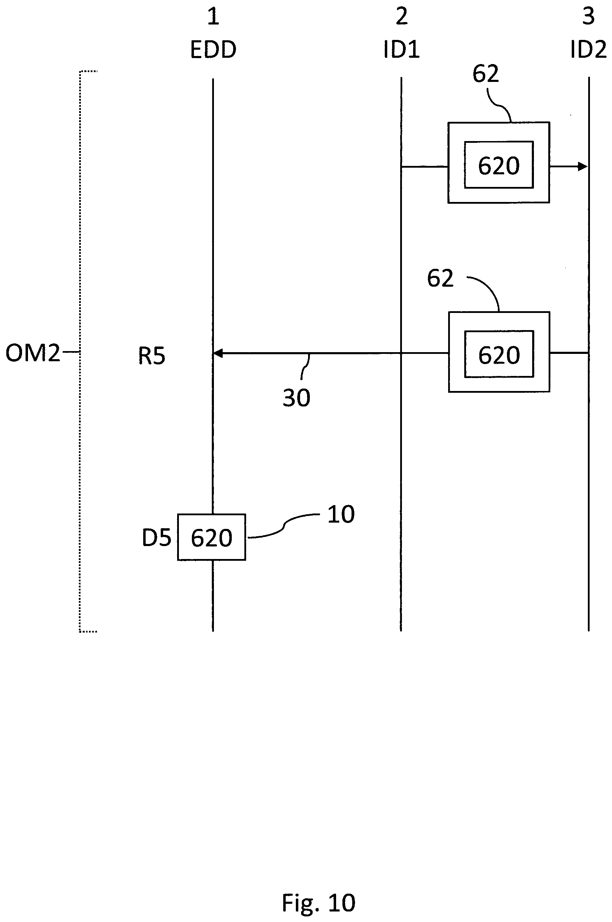

Figure 10 shows an example of the method according of the invention. The electronic display device 1 operates in the second operating mode OM2 and receives R5 fifth information 62 from the second information device 3. The fifth information 62 may have originated from the first information device 2. However, as the electronic display device 1 operates in the second operating mode OM2, the fifth information 62 may not be sent directly to the electronic display device 1 via the first communication path 20 but only indirectly via the second communication path 30. The fifth information 62 comprising fifth display information 620 and the electronic display device 1 may display D5 the fifth display information 620.

For example, the electronic display device 1 may switch from the first operating mode OM1 to the second operating mode OM2, due to a fulfilled first predefined condition, such as an inactive communication state between the first information device 2 and the electronic display device 1. When the connection state switches, the first information device 1 may send the fifth information 62 to the second information device 3 instead of the electronic display device 1. In other words, the first information device 2 may be able to send the fifth information 62 to the electronic display device 1 indirectly, although the first communication path 20 between the electronic display device 1 and the first information device 2 may be inactive. Alternatively or in addition, the second information device may actively request the fifth information from the first information device. Such request may be automatic or triggered by a user. For example, a shop employee may send a request to the first information device 2 to receive the most recent price information 62 on the second information device 3. Then, this information 62 may be forwarded automatically or manually triggered by a user input to the electronic display device 1.

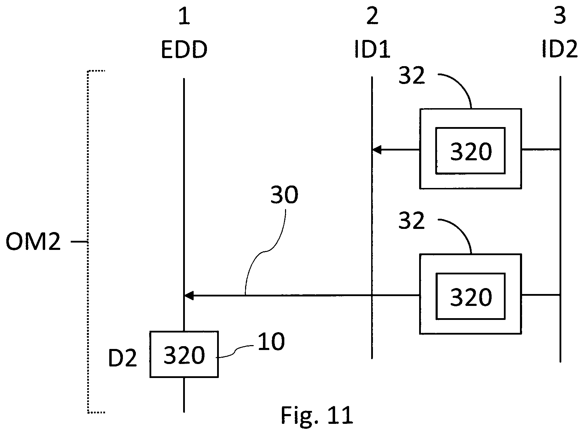

Figure 11 shows an example of the method according to the invention. The electronic display device 1 operates in the second operating mode OM2. The electronic display device 1 receives the second information 32 from the second information device 3. Also, the first information device 2 receives the second information 32. As shown, the second information 32 is first send to the first information device 2 by the second information device. However, the second information 32 may also be sent first to the electronic display device 1 or simultaneously to the first information device 2 and the electronic display device 1.

In a retail environment, for example, the first information device 2 may be a server and the second information device 3 may be a handheld device, such as a mobile phone. The server 2 may store information of several retail items within the retail store and in particular display information of various electronic display devices 1 in the retail store in a database. If the second information device 3 only sent second information 32 to the electronic display device 1, the server 2 would not be informed of an update of the display information. In order to avoid inconsistencies in the database, the second information device 3 sends the second information 32 to both, the electronic display device 1 and the first information device 2, to keep the first information device 2 and the database up to date.

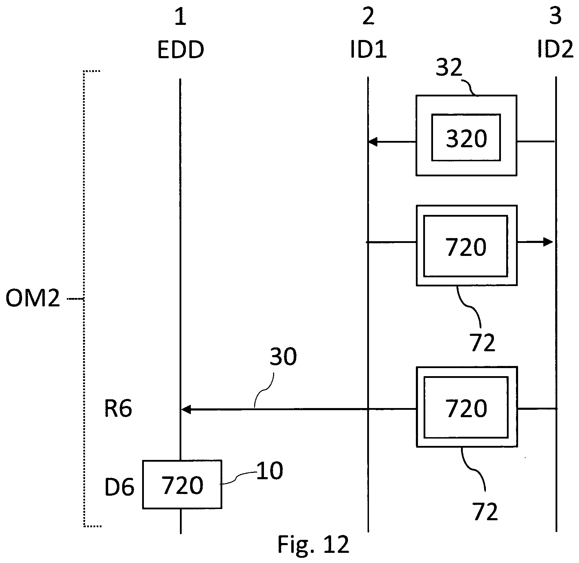

Figure 12 shows an example of the method according to the invention. The electronic display device 1 operates in the second operating mode OM2. The second information device 3 sends second information 32 to the first information device 2. The first information device 2 evaluates the second information 32 and evaluates if a predefined criterion is fulfilled. For example, the predefined criterion is fulfilled, when the second information is more recent than corresponding information stored on the first information device 2. However, in figure 12, the second information 32 is not more recent than corresponding information stored on the first information device 2. In this case, the first information device 2 sends corresponding information, namely sixth information 72 comprising sixth display information 720 to the second information device 3, which then forwards the sixth information 72 to the electronic display device 1. The electronic display device 1 receives R6 the sixth information 72 then extracts the sixth display information 720 and displays D6 the sixth display information 720.

The method may involve further steps that acknowledge the reception of second information or integrity verification of the second information (not shown). For example, the electronic display device may signal a switch of the operating modes acoustically and/or optically. For example, the electronic display device 1 may verify the integrity of the received second information for example by calculating and comparing hash values. For example, the second information may be encrypted and the electronic display device 1 decrypts the second information before updating the display information. For example, the electronic display device 1 requires a user input at the electronic display device to acknowledge the second information. For example, such a user input could comprise the input of a passcode.

Further examples of the invention are disclosed in the following paragraphs:
A first example comprises a method for updating display information of an electronic display device, the electronic display device having a first operating mode for receiving first information from a first information device via at least a first communication path and a second operating mode for receiving second information from a second information device via a second communication path, the method comprising: switching, by the electronic display device, from the first operating mode to the second operating mode based on a first predefined condition, receiving, at the electronic display device operating in the second operating mode, second information from the second information device via the second communication path, and displaying, at the electronic display device operating in the second operating mode, display information based on the second information.

A second example comprises the method according to the first example, the method further comprising: receiving, at the electronic display device operating in the first operating mode, first information from the first information device via at least the first communication path, and displaying, at the electronic display device operating in the first operating mode, the display information based on the first information.

A third example comprises the method according to the first or second example, the method further comprising: switching, by the electronic display device, from the second operating mode to the first operating mode based on a second predefined condition.

A fourth example comprises the method according to any of the first to third examples, wherein the first predefined condition is based on a connection state.

A fifth example comprises the method according to the third example, wherein the second predefined condition is based on a connection state.

A sixth example comprises the method according to fourth example, when dependent from the third example, wherein the second predefined condition is based on the connection state.

A seventh example comprises the method according to any of the fourth to sixth examples, wherein the connection state comprises an active connection state and an inactive connection state, wherein the active connection state indicates that the electronic display device and the first information device are communicatively connected via at least the first communication path and the inactive connection state indicates that the electronic display device and the first information device are not communicatively connected.

An eight example comprises the method according to the seventh example, wherein the first predefined condition is fulfilled when the connection state switches from the active connection state to the inactive connection state.

A nineth example comprises the method according to the eight example, wherein the connection state switches from the active state to the inactive state when a communication between the electronic display device and the first information device is lost and/or disrupted and/or not possible.

A tenth example comprises the method according to any of the fifth to nineth examples, when dependent from the seventh and fifth or sixth examples, wherein the second predefined condition is fulfilled when the connection state switches from the inactive state to the active state.

An eleventh example comprises the method according to the tenth example, wherein the connection state switches from the inactive state to the active state when a communication between the electronic display device and the first information device is established.

A twelfth example comprises the method according to any of the preceding examples, wherein the first predefined condition is fulfilled when the electronic display device receives a first switching message from the first information device via at least the first communication path and/or from the second information device via the second communication path.

A thirteenth example comprises the method according to any of the preceding examples, when dependent from the third example, wherein the second predefined condition is fulfilled when the electronic display device receives a second switching message from the first information device via at least the first communication path and/or from the second information device via the second communication path.

A fourteenth example comprises the method according to the thirteenth example, when dependent from the twelfth example , wherein the first switching message and the second switching message comprise a switching command.

A fifteenth example comprises the method according to any of the preceding examples, the method further comprising: receiving, at the electronic display device operating in the first operating mode, periodic messages from the first information device via at least the first communication path, and wherein the first predefined condition is fulfilled when the electronic display device has not received a periodic message for a predefined amount of time.

A sixteenth example comprises the method according to the fifteenth example , when dependent from the third example, wherein the second predefined condition is fulfilled when the electronic display device again receives the periodic messages.

A seventeenth example comprises the method according to any of the preceding examples, wherein the first predefined condition is fulfilled at a certain time of a day and/or when a user input is received at the electronic display device.

An eighteenth example comprises the method according to any of the preceding examples, when dependent from the third example, wherein the second predefined condition for switching from the second operating mode to the first operating mode is fulfilled at a certain time of a day and/or when a user input is received at the electronic display device.

A nineteenth example comprises the method according to any of the preceding examples, the method further comprising: receiving, at the electronic display device, the first predefined condition from the first information device via at least the first communication path and/or from the second information device via the second communication path.

A twentieth example comprises the method according to any of the preceding examples, when dependent from the third example, wherein the method further comprising: receiving, at the electronic display device, the second predefined condition from the first information device via at least the first communication path and/or from the second information device via the second communication path.

A twenty-first example comprises the method according to any of the preceding examples, the method further comprising: selecting and/or configuring the first predefined condition by a user input at the electronic display device.

A twenty-second example comprises the method according to any of the preceding examples, when dependent from the third example, the method further comprising: selecting and/or configuring the second predefined condition by a user input at the electronic display device.

A twenty-third example comprises the method according to any of the preceding examples, the method further comprising: receiving, at the electronic display device operating in the second operating mode, third information via at least the first communication path.

A twenty-fourth example comprises the method according to the twenty-third example, the method further comprising: displaying, at the electronic display device operating in the second operating mode, the display information based on the third information.

A twenty-fifth example comprises the method according to the twenty-third example, the method further comprising: discarding, by the electronic display device operating in the second operating mode, the third information.

A twenty-sixth example comprises the method according to any of the preceding examples, the method further comprising: receiving, at the electronic display device operating in the first operating mode, fourth information via the second communication path.

A twenty-seventh example comprises the method according to the twenty-sixth example, the method further comprising: displaying, at the electronic display device operating in the first operating mode, the display information based on the fourth information.

A twenty-eight example comprises the method according to the twenty-sixth example, the method further comprising: discarding, by the electronic display device operating in the first operating mode, the fourth information.

A twenty-ninth example comprises the method according to any of the preceding examples, wherein the first information has been configured by the first information device and/or the second information has been configured by the second information device.

A thirtieth example comprises the method according to any of the preceding examples, the method further comprising: receiving, at the electronic display device operating in the second operating mode, fifth information from the second information device via the second communication path, wherein the fifth information originated from the first information device and was forwarded by the second information device.

A thirty-first example comprises the method according to any of the preceding examples, wherein the second information is transmitted by the second information device to the first information device.

A thirty-second example comprises the method according to any of the preceding examples, when dependent from the third example, the method further comprising: in response to switching, by the electronic display device, from the second operating mode to the first operating mode based on the second predefined condition, sending to the first information device the second information via at least the first communication path.

A thirty-third example comprises the method according to any of the preceding examples, the method further comprising: receiving, at the first information device, the second information from the second information device.

A thirty-fourth example comprises the method according to the thirty-third example, the method further comprising: evaluating, by the first information device, the second information based on a predefined evaluation criterion.

A thirty-fifth example comprises the method according to the thirty-fourth example, the method further comprising, if the predefined evaluation criterion is fulfilled, storing, by the first information device, the second information, and/or if the predefined evaluation criterion is not fulfilled, sending, by the first information device, sixth information, different from the second information, to the second information device, to be forwarded to the electronic display device.

A thirty-sixth example comprises the method according to the thirty-fourth or thirty-fifth example, wherein the evaluation criterion is fulfilled when the received second information corresponds to predefined data.

A thirty-seventh example comprises the method according to the thirty-fourth or thirty-fifth example, wherein the evaluation criterion is fulfilled when the received second information is more recent than the corresponding data stored on the first information device.

A thirty-eight example comprises the method according to any of the preceding examples, the method further comprising: emitting, by the electronic display device, an electronic and/or optical and/or acoustic signal, during and/or after switching from the first operating mode to the second operating mode and/or from the second operating mode to the first operating mode.

A thirty-ninth example comprises the method according to any of the preceding examples, the method further comprising: receiving, at the electronic display device, a command from the second information device via the second communication path, and in response to receiving the command, emitting, by the electronic display device, an electronic and/or optical and/or acoustic signal.

A fortieth example comprises the method according to any of the preceding examples, the method further comprising: verifying, by the electronic display device, integrity of the received second information, in particular by calculating and comparing hash values.

A forty-first example comprises the method according to any of the preceding examples, wherein the second information received from the second information device is encrypted, and the method further comprising: decrypting, at the electronic display device, the second information.

A forty-second example comprises the method according to any of the preceding examples, the method further comprising: after receiving, at the electronic display device, the second information from a second information device via a second communication path, and before displaying, at the electronic display device, the received second information, requesting a user input at the electronic display device.

A forty-third example comprises the method according to any of the preceding examples, the method further comprising: receiving, at the electronic display device operating in the second operating mode, the second information from a third information device via the second communication path.

A forty-fourth example comprises the method according to any of the preceding examples, the method further comprising: sending, by the electronic display device operating in the second operating mode, a message to the second information device enabling the second information device to identify and/or display the electronic display device as operating in the second operating mode.

A forty-fifth example comprises the method according to any of the preceding examples, wherein the first information device is or comprises one or more servers, and/or is connected to a cloud service.

A forty-sixth example comprises the method according to any of the preceding examples, wherein the second information device is a handheld and/or portable device, preferably a smartphone or remote control, and/or a computer.

A forty-seventh example comprises the method according to any of the preceding examples, wherein the electronic display device is or comprises an electronic shelf label or digital shelf label or a rail with electronic shelf labels.

A forty-eight example comprises the method according to any of the preceding examples, wherein the first display information and/or second display information comprises product information, in particular, price information.

A forty-ninth example comprises the method according to the forty-seventh example, wherein the electronic shelf label is associated with a product and the first information and second information relate to information of the associated product.

A fiftieth example comprises the method according to any of the preceding examples, wherein receiving, at the electronic display device, the first information from the first information device via at least the first communication path comprises receiving the first information via one or more access points.

A fifty-first example comprises the method according to any of the preceding examples, the method further comprising: receiving, at the electronic display device operating in the first operating mode, the first information from the first information device via a third communication path.

A fifty-second example comprises the method according to the fifty-first example, wherein the first communication path and the third communication path use a different communication technology.

A fifty-third example comprises the method according to any of the preceding examples, wherein the first communication path and the second communication path use a different or the same communication technology.

A fifty-fourth example comprises the method according to the fifty-second or fifty-third example, wherein the communication technology comprises wireless communication technologies, in particular Bluetooth Low Energy, WiFi, or RFID.

A fifty-fifth example comprises an electronic display device comprising at least one processor and at least one memory further storing instructions that, when executed by the at least one processor, cause the electronic display device to execute the method according to any of the first to thirty-second and thirty-eighth to fifty-fourth examples.

A fifty-sixth example comprises an electronic display device configured to execute the method steps according to any of the first to thirty-second and thirty-eighth to fifty-fourth examples.

A fifty-seventh example comprises a server configured to execute the method steps according to any of the thirty-third to thirty-seventh examples.

A fifty-eight example comprises a computer program comprising instructions which, when the program is executed by a computer, cause the computer to carry out the method according to any of the first to thirty-second and thirty-eighth to fifty-fourth examples.

A fifty-ninth example comprises a system comprising: at least one electronic display device, a first information device, and a second information device, wherein the electronic display device is configured to execute the method steps according to any of the first to thirty-second and thirty-eighth to fifty-fourth examples.

A sixtieth example comprises an electronic display device configured to: operate in a first operating mode and a second operating mode, receive a first information from a first information device via at least a first communication path, while operating in the first operating mode, and receive a second information from a second information device via a second communication path, while operating in the second operating mode, display display information based on the first information and display information based on second information, switch from the first operating mode to the second operating mode based on a first predefined condition.

A sixty-first example comprises the electronic display device according to the sixtieth example, the electronic display device further configured to: switch from the second operating mode to the first operating mode based on a second predefined condition.
- 1: Electronic display device
- 10: Display
- 2: First information device
- 20: First communication path
- 22: First information
- 24: First switching message
- 28: Periodic message
- 220: First display information
- 3: Second information device
- 32: Second information
- 34: Second switching message
- 320: Second display information
- 42: Third information
- 420: Third display information
- 52: Fourth information
- 520: Fourth display information
- 62: Fifth information
- 620: Fifth display information
- 72: Sixth information
- 720: Sixth display information
- S1: Switching from the fist operating mode to the second operating mode
- S2: Switching from the second operating mode to the first operating mode
- R1: Receiving, at the electronic display device, first information
- R11: Receiving, at the electronic display device, periodic messages
- R2: Receiving, at the electronic display device, second information
- R3: Receiving, at the electronic display device, third information
- R4: Receiving, at the electronic display device, forth information
- R5: Receiving, at the electronic display device, fifth information
- R6: Receiving, at the electronic display device, sixth information
- D1: Displaying, at the electronic display device, first information
- D2: Displaying, at the electronic display device, second information
- D3: Displaying, at the electronic display device, third information
- D4: Displaying, at the electronic display device, forth information
- D5: Displaying, at the electronic display device, fifth information
- D6: Displaying, at the electronic display device, sixth information

## Claims

1. A method for updating display information of an electronic display device (1), the electronic display device (1) having a first operating mode (OS1) for receiving first information (22) from a first information device (2) via at least a first communication path (20) and a second operating mode (OS2) for receiving second information (32) from a second information device (3) via a second communication path (30), the method comprising:
switching (S1), by the electronic display device (1), from the first operating mode (OS1) to the second operating mode (OS2) based on a first predefined condition,
receiving (R2), at the electronic display device (1) operating in the second operating mode (OS2), second information (32) from the second information device (3) via the second communication path (30), and
displaying (D2), at the electronic display device (1) operating in the second operating mode (OS2), display information (320) based on the second information (32).

2. The method according to claim 1, the method further comprising:
receiving (R1), at the electronic display device (1) operating in the first operating mode (OM1), first information (22) from the first information device (2) via at least the first communication path (22), and
displaying (D1), at the electronic display device (1) operating in the first operating mode (OM1), the display information (220) based on the first information (22).

3. The method according to claims 1 or 2, the method further comprising:
switching (S2), by the electronic display device (1), from the second operating mode (OM2) to the first operating mode (OM1) based on a second predefined condition.

4. The method according to claims 1 to 3, wherein the first predefined condition is based on a connection state and/or when dependent from claim 3, the second predefined condition is based on the connection state.

5. The method according to claim 4, wherein the connection state comprises an active connection state and an inactive connection state, wherein
the active connection state indicates that the electronic display device (1) and the first information device (2) are communicatively connected via at least the first communication path (20) and
the inactive connection state indicates that the electronic display device (1) and the first information device (2) are not communicatively connected.

6. The method according to claim 5, wherein the first predefined condition is fulfilled when the connection state switches from the active connection state to the inactive connection state.

7. The method according to claim 6, wherein the connection state switches from the active state to the inactive state when a communication between the electronic display device (1) and the first information device (2) is lost and/or disrupted and/or not possible.

8. The method according to any of claims 4 to 7, when dependent from claim 3, wherein the second predefined condition is fulfilled when the connection state switches from the inactive state to the active state.

9. The method according to claim 8, wherein the connection state switches from the inactive state to the active state when a communication between the electronic display device (1) and the first information device (2) is established.

10. The method according to any of the preceding claims, when dependent from claim 3, the method further comprising:
in response to switching, by the electronic display device (1), from the second operating mode (OM2) to the first operating mode (OM1) based on the second predefined condition, sending to the first information device (2) the second information (32) via at least the first communication path (30).

11. The method according to any of the preceding claims, the method further comprising:
emitting, by the electronic display device (1), an electronic and/or optical and/or acoustic signal, during and/or after switching from the first operating mode (OM1) to the second operating mode (OM2) and/or from the second operating mode (OM2) to the first operating mode (OM1).

12. The method according to any of the preceding claims, the method further comprising:
receiving, at the electronic display device (1), a command from the second information device (3) via the second communication path (30), and
in response to receiving the command, emitting, by the electronic display device (1), an electronic and/or optical and/or acoustic signal.

13. The method according to any of the preceding claims, the method further comprising:
after receiving, at the electronic display device (1), the second information (32) from a second information device (3) via a second communication path (30), and before displaying, at the electronic display device (1), the received second information (32), requesting a user input at the electronic display device (1).

14. The method according to any of the preceding claims, the method further comprising:
sending, by the electronic display device (1) operating in the second operating mode (OM2), a message to the second information device (5) enabling the second information device (5) to identify and/or display the electronic display device (1) as operating in the second operating mode (OM2).

15. An electronic display device (1) configured to execute the method steps according to any of claims 1 to 14.
